# EUROPÄISCHE PATENTSCHRIFT

(11) **EP 3 206 770 B1**
(45) Veröffentlichungstag und Bekanntmachung des Hinweises auf die Patenterteilung: **20.03.2019**
(21) Anmeldenummer: 15813247.2
(22) Anmeldetag: 13.10.2015
(51) Int. Cl.: A63H 33/12

(54) **BAUSTEIN ZUM AUFBAU ELASTISCHER ELEMENTE**
COMPONENT FOR PRODUCING ELASTIC ELEMENTS
BLOC POUR LA FABRICATION DE STRUCTURES ÉLASTIQUES

(30) Priorität: 13.10.2014 DE 102014014891; 13.10.2014 DE 202014008653 U
(43) Veröffentlichungstag der Anmeldung: 23.08.2017
(73) Patentinhaber: Bionictoys GmbH, 10405 Berlin (DE)
(72) Erfinder: PASTERNAK, Marcel, 13353 Berlin (DE)
(74) Vertreter: Castell, Klaus
(86) Internationale Anmeldenummer: PCT/DE2015/000501
(87) Internationale Veröffentlichungsnummer: WO 2016/058578

(56) Entgegenhaltungen:
- CN-A- 103 402 594
- US-A- 4 077 562
- US-A- 5 312 283
- US-A1- 2003 175 669
- US-B1- 6 672 931

## Beschreibung

Die Erfindung betrifft einen Spielbaustein zum Aufbau einer elastischen Struktur, aufweisend eine Mehrzahl von mindestens drei aufeinanderfolgenden kettengliedartigen Einzelgliedern. Ein Spielbaustein ist aus der US-A-6 672 931 bekannt.

Zum Aufbau von Greifern und bewegten Elementen sind aus der Bionik andere Grundelemente bekannt als diese aus der klassischen Mechanik bekannt sind. Statt gelagerten Achsen und sich drehbar gelagerten Elementen ist es aus der Beobachtung der Natur bekannt, flexible und starre Elemente in besonderer Anordnung zu kombinieren, um Bewegungen über gelenkgetriebeähnliche Strukturen ineinander zu überführen. Ein Beispiel hierfür sind flossen- oder flügelähnliche Strukturen, die auf eine Scherbewegung durch eine Flossen- oder Flügeldeformation reagieren, die durch die Formveränderung eine veränderte Anströmung erzeugen und so der Scherkraft entgegenwirken. Im Stand der Technik wird diese Technologie für Segelschiffe sowohl im Unterwasser- als auch im Oberwasserschiff verwendet. Im Fachjargon wird häufig der Begriff Fin Ray Prinzip® verwendet, um auf die allgemeine Strukturähnlichkeit solcher bionischen Bauelemente hinzuweisen.

Die Bionik ist im Gegenteil zur Mechanik ein vergleichsweise junger Forschungs- und Technologiezweig. Aufgabe der Erfindung ist es daher, ein einfaches Bauelement als Spiel- und Studierwerkzeug zur Verfügung zu stellen, mit dem sich die Prinzipien der Bionik einfach aufbauen und studieren lassen.

Die erfindungsgemäße Aufgabe wird dadurch gelöst, dass die Verbindung zwischen den einzelnen Einzelgliedern eine geringere Rückstellkraft in Bezug auf eine Biegeelastizität (mit Richtung in Bezug auf das Schubmodul) aufweist als die Rückstellkraft in Bezug auf eine Zugelastizität (mit Richtung in Bezug auf das Elastizitätsmodul). Weitere vorteilhafte Ausgestaltungen sind in den Unteransprüchen zu Anspruch 1 angegeben.

Nach der Erfindung ist also vorgesehen, dass ein kettenähnliches Element als Spielbaustein eine geringere Rückstellkraft in Bezug auf eine Scher- oder Biegebeanspruchung aufweist als auf eine Zugbeanspruchung. Das Wesentliche an dem Spielbaustein ist, dass es eine gewisse Eigenstabilität aufweist, gleichwohl aber elastisch verformbar bleibt, wobei die elastische Verformbarkeit in drei zueinander senkrechten Richtungen unterschiedlich ausgeprägt ist. Eine Kette weist drei Vorzugsrichtungen auf. Eine zur geraden Kettenlinie kollineare Richtung und zwei dazu senkrechte Richtungen.

Wichtig für eine erste Ausgestaltung der Erfindung ist es, dass eine Biegeelastizität (mit Richtung in Bezug auf das Schubmodul) des Spielbausteins in einem vorbestimmten Intervall liegt, damit der Spielbaustein mit handelsüblichem Spielzeug verwendet werden kann, um damit beispielsweise bionische Greifer aufzubauen.

In besonderer Ausgestaltung der Erfindung ist es vorgesehen, dass die Biegeelastizität in die beiden zur Kettenlinie senkrechten Richtungen unterschiedlich stark ausgeprägt ist. Existieren also drei verschiedene Elastizitäten in drei verschiedene Raumrichtungen, so ist zwangsläufig eine der Elastizitäten mit der höchsten Rückstellkraft ausgeprägt und zwangsläufig eine andere Elastizität mit der geringsten Rückstellkraft ausgeprägt.

Für eine weitere Ausgestaltung der Erfindung ist es wichtig, dass eine Zugelastizität (mit Richtung in Bezug auf das Elastizitätsmodul) des Spielbausteins in einem vorbestimmten Intervall liegt, damit der Spielbaustein mit handelsüblichem Spielzeug verwendet werden kann, um damit beispielsweise elastische Gelenke nach Manier eines elastischen Sprunggelenks aufzubauen.

Für einen vielseitigen Einsatz in einem Spielbaukastensystem ist in vorteilhafter Ausgestaltung der Erfindung vorgesehen, dass die Einzelglieder mindestens eine Vorrichtung, bevorzugt eine Ausnehmung aufweist zur Verbindung mit einem anderen, stangenartigen starren Spielbaustein und/oder einer anderen starren Achse. Die nach dem bionischen Prinzip aufgebauten Flossen- oder Flügelelemente können auch als Greifelemente oder als Hebelgetriebe eingesetzt werden. Um einen Greifer, eine flossenähnliche Struktur oder einen Hebelgetriebe in besonders einfacher Weise als Spiel- und Studierwerkzeug aufbauen zu können, werden Starrachsen oder stangenartige, starre Elemente als Verbindungselemente eingesetzt, welche das hier vorgestellte Spielbauelement zu einem in verschiedene Raumrichtungen unterschiedlich auf Scherbewegung reagierende Struktur werden zu lassen.

Je nach Art und Weise der aufzubauenden Struktur kann es notwendig sein, in das elastische Spielbauelement ein Drehmoment zu übertragen oder davon abzuleiten. Dafür ist in dem Spielbauelement in vorteilhafter Weise die Ausnehmung quer zur Achse der Ausnehmung profiliert. Zur Aufnahme von einem weiteren starren Element kann das Spielbauelement eine einfache Ausnehmung in Form einer zylindrischen Bohrung aufweisen. Es ist aber auch möglich, eine von der Zylinderform abweichende Struktur in Form einer regelmäßigen oder unregelmäßigen polygonalen Struktur, eine Schlitzstruktur oder gar eine kreuzförmige Struktur vorzusehen, um ein Drehmoment sicher in das Spielbauelement zu übertragen oder davon abzuleiten.

Für einen möglichst breiten Einsatz ist in vorteilhafter Ausgestaltung der Erfindung vorgesehen, dass der Abstand der einzelnen Einzelglieder etwa gleich groß ist wie die Größe eines Einzelglieds, gemessen als mittlerer Durchmesser. Dadurch die Anzahl der möglichen Verknüpfungspunkte mit weiteren, anderen Bauelemente besonders groß und daher flexibel gestaltbar.

In einer besonderen Ausgestaltung der Erfindung ist vorgesehen, dass die Einzelglieder ein starres Zentrum aufweisen, und somit der Spielbaustein anisotrope Materialeigenschaften in Bezug auf die Elastizität aufweist. Diese, auch von der Erfindung umfasste Ausführungsform ist angedacht für solche Aufbauten, in denen ein besonders starkes Drehmoment auf das Spielbauelement ausgeübt oder von diesem abgeleitet werden soll. Typische Anwendungen für diese besondere Ausführungsform der Erfindung sind Aufbauten, in denen eine Sprunggelenkstruktur oder allgemein eine Struktur aufgebaut werden soll, in welcher die hohe Energie eines auf Zug belasteten Spielbausteins in ein Drehmoment, beispielsweise nach Art eines sich mit Kraft öffnenden Gelenks überführt, werden soll.

Der Aufbau des erfindungsgemäßen Spielbauelements kann je nach bevorzugter Einsatzart sehr unterschiedlich sein. In einfacher Ausgestaltung der Erfindung ist eine einteilige Struktur aus einem einzigen Material vorgesehen, wobei in diesem Fall die anisotropen Materialeigenschaften durch die Struktur und durch die Art und Form der Ausnehmung in den Einzelgliedern bestimmt wird. Der Spielbaustein kann durch Spritzguss hergestellt oder aus dem Vollmaterial geschnitten sein. Eine weitere Möglichkeit der Herstellung besteht in dem Aufbau durch ein 3D-Druck-Verfahren. Um die elastischen Eigenschaften bei der Herstellung durch 3D-Druck kontrollieren zu können, wird dies am besten durch ein schichtweise Legen eines elastischen Filaments oder eines elastische Fadens erreicht, der thermoplastisch verformbar oder klebbar ist. Zum Aufbau werden dabei Grundkörper gelegt und diese sodann mit einem Faden aus identischem Material umwickelt. Es ist somit in Ausgestaltung des Herstellungsverfahrens vorgesehen, dass eine mehrteilige Form vorgesehen ist, in welcher die Einzelglieder aus einem spulenkörperartigen Element bestehen, welches mit weiteren spulenartigen Elementen benachbart ist, wobei die einzelnen spulenartigen Elemente durch eine mäanderförmige Wicklung miteinander verbunden sind. Zum Aufbau durch 3D-Druck können dabei Filamente aus unterschiedlichem Material für die spulenartigen Grundkörper und der mäanderförmigen Wicklung verwendet werden oder es ist auch möglich, die gesamte Struktur aus ein- und demselben Filament ohne Unterbrechung des Materialflusses zu legen. Dabei bestimmt der Aufbau des Filaments, insbesondere die Legerichtung ebenso die anisotropen Eigenschaften der Kette aus den Einzelgliedern, was dadurch zu erklären ist, dass das Filament eine andere Zugelastizität aufweist als eine Biegeelastizität. Wird durch den Aufbau, also das Legemuster der Filamente, eine Biegebeanspruchung des fertigen Spielbausteins übersetzt in eine Zugbeanspruchung des einzelnen Filaments und eine Zugbeanspruchung des fertigen Spielbausteins übersetzt in eine Scherbeanspruchung des einzelnen Filaments, so können hierdurch sehr stark anisotrope Materialeigenschaften des fertigen Spielbausteins erzeugt werden.

Je nach erforderlicher Stabilität und Resistenz gegen Staub, Schmutz, Schweiß, und chemischen Subtanzen kann für den Spielbaustein vorgesehen sein, dass die Gesamtheit der Einzelglieder in einem Elastomer, in Silikon und/oder einem Kunst- oder Naturkautschuk vergossen ist.

Für eine sichere Verbindung des Spielbausteins mit einem weiteren Spielbaustein kann des Weiteren vorgesehen sein, dass die Einzelglieder über ein Rastelement, eine elastische Lippe, eine Keilform und/oder ein Gewinde verfügen, über welche der Spielbaustein, bevorzugt mit einem weiteren, starren Spielbaustein verbindbar ist.

Um die elastischen Eigenschaften des Spielbausteins in die verschiedenen Raumrichtungen zu kontrollieren, kann vorgesehen sein, dass die Verbindung zweier Einzelglieder tailliert ist. Durch den Taillenschnitt oder durch die Taillierung kann die Elastizität in Bezug auf eine Scherbewegung kontrolliert werden, wobei sich diese dadurch erzeugte Elastizität mit der Elastizität durch die Art des Legemusters des Filaments überlagert.

In konkreter Ausgestaltung der Erfindung hat es sich als vorteilhaft herausgestellt, wenn der Spielbaustein eine Zugelastizität (Elastizitätsmodul) im Intervall zwischen 2 N/mm² (2 MPa) und 750 N/mm² (750 MPa) aufweist, bevorzugt eine Zugelastizität (Elastizitätsmodul) zwischen 4 N/mm² (4 MPa) und 250 N/mm² (250 MPa) aufweist, besonders eine Zugelastizität (Elastizitätsmodul) zwischen 5 N/mm² (5 MPa) und 50 N/mm² (50 MPa) aufweist. Spielbausteine mit dieser Zugelastizität haben sich als vorteilhaft erwiesen, elastische Gelenke, Fersengelenke, elastische Flügelgelenke oder elastische Wipp- und Beugekonstruktionen mit handelsüblichem Spielzeug für Kinder aufzubauen. Weisen die Spielbausteine eine Zugelastizität (Elastizitätsmodul) mit einem höheren Elastizitätsmodul auf, so vermögen die üblichen Verbindungsstärken oder -stabilitäten von Spiel- und Studierwerkzeug die Kräfte nicht mehr aufzunehmen. Das konstruierte Spiel- und Studierwerkzeug würde unter der Eigenspannung kollabieren. Weist hingegen das Material des Spielbausteins eine zu geringe Rückstellkraft auf, so würden selbst einfache elastische Gelenke nicht dazu in der Lage sein, das Gewicht eines typischen Aufbaus einer Konstruktion aus Kinderspielzeug aufzunehmen.

In Bezug auf die Schubmoduln haben sich folgende Größen als ideal zur Verwendung als Spiel- und Studierwerkzeug bewährt:
In Richtung eines ersten Schubmoduls senkrecht zur Kettenlinienrichtung, also in einem rechten Winkel zur geraden Kettenlinie, zeigt ein im Mittel etwa 22 mm² bis 38 mm² Querschnitt aufweisender Spielbaustein eine Auslenkung von 1,8 cm (2,5 cm) bei einer irdischen Gewichtskraft von 8 g, entsprechend etwa ca. 0,08 N, (13 g, entsprechend etwa 0,13 N) bei einer Länge des Spielbausteins von 20 cm.

Gerade noch bewährt hat sich ein "weicherer" Spielbaustein mit folgenden Werten: In Richtung eines ersten Schubmoduls senkrecht zur Kettenlinienrichtung, also in einem rechten Winkel zur geraden Kettenlinie, zeigt ein im Mittel etwa 22 mm² bis 38 mm² Querschnitt aufweisender Spielbaustein eine Auslenkung von 3,6 cm bei einer irdischen Gewichtskraft von 8 g, entsprechend etwa ca. 0,08 N, bei einer Länge des Spielbausteins von 20 cm.

Gerade noch bewährt hat sich ein "härterer" Spielbaustein mit folgenden Werten: In Richtung eines ersten Schubmoduls senkrecht zur Kettenlinienrichtung, also in einem rechten Winkel zur geraden Kettenlinie, zeigt ein im Mittel etwa 22 mm² bis 38 mm² Querschnitt aufweisender Spielbaustein eine Auslenkung von 0,9 cm bei einer irdischen Gewichtskraft von 8 g, entsprechend etwa ca. 0,08 N, bei einer Länge des Spielbausteins von 20 cm.

In Richtung eines zweiten Schubmoduls senkrecht zur Kettenlinienrichtung, also in einem rechten Winkel zur geraden Kettenlinie, zeigt ein im Mittel etwa 22 mm² bis 38 mm² Querschnitt aufweisender Spielbaustein eine Auslenkung von 0,9 cm (1,6 cm) bei einer irdischen Gewichtskraft von 9 g, entsprechend etwa ca. 0,09 N, (10 g, entsprechend etwa 0,10 N) bei einer Länge des Spielbausteins von 20 cm.

Gerade noch bewährt hat sich ein "weicherer" Spielbaustein mit folgenden Werten: In Richtung eines zweiten Schubmoduls senkrecht zur Kettenlinienrichtung, also in einem rechten Winkel zur geraden Kettenlinie, zeigt ein im Mittel etwa 22 mm² bis 38 mm² Querschnitt aufweisender Spielbaustein eine Auslenkung von 1,8 cm bei einer irdischen Gewichtskraft von 9 g, entsprechend etwa ca. 0,09 N, bei einer Länge des Spielbausteins von 20 cm.

Gerade noch bewährt hat sich ein "härterer" Spielbaustein mit folgenden Werten: In Richtung eines ersten Schubmoduls senkrecht zur Kettenlinienrichtung, also in einem rechten Winkel zur geraden Kettenlinie, zeigt ein im Mittel etwa 22 mm² bis 38 mm² Querschnitt aufweisender Spielbaustein eine Auslenkung von 0,5 cm bei einer irdischen Gewichtskraft von 9 g, entsprechend etwa ca. 0,09 N, bei einer Länge des Spielbausteins von 20 cm.

In Richtung eines Torsionsmoduls mit der geraden Kettenlinie als Torsionsachse, zeigt ein im Mittel etwa 22 mm² bis 38 mm² Querschnitt aufweisender Spielbaustein bei Torsion um 90° ein Drehmoment von 7g (ca. 0,07 N) bei einem Hebel von 10 cm und bei einer Länge des Torsionsbereich des Spielbausteins von 20 cm.

Gerade noch bewährt hat sich ein "weicherer" Spielbaustein mit folgenden Werten: In Richtung eines Torsionsmoduls mit der geraden Kettenlinie als Torsionsachse, zeigt ein im Mittel etwa 22 mm² bis 38 mm² Querschnitt aufweisender Spielbaustein bei Torsion um 90° ein Drehmoment von 3,5 g (ca. 0,035 N) bei einem Hebel von 10 cm und bei einer Länge des Torsionsbereich des Spielbausteins von 20 cm.

Gerade noch bewährt hat sich ein "härterer" Spielbaustein mit folgenden Werten: In Richtung eines Torsionsmoduls mit der geraden Kettenlinie als Torsionsachse, zeigt ein im Mittel etwa 22 mm² bis 38 mm² Querschnitt aufweisender Spielbaustein bei Torsion um 90° ein Drehmoment von 14 g (ca. 0,14 N) bei einem Hebel von 10 cm und bei einer Länge des Torsionsbereich des Spielbausteins von 20 cm.

Mit diesen Werten des Elastizitätsmodul eignet sich der Spielbaustein für den Einsatz in Spielzeug für den Handgebrauch und zur Verwendung mit für Spielzeug typischen, zum Beispiel batteriebetriebenen Stell- und Antriebsmotoren, die mit mindestens einer Monozelle (D-Zelle), Babyzelle (C-Zelle), Mignonzelle (AA-Zelle), Minizelle (AAA-Zelle), oder mindestens einem typischen 9 V-Block (9V-Zelle) betrieben werden oder mit einem Trafo für Kinderspielzeug oder mit Solarzellen für Kinderspielzeug betrieben werden. Die Drehmomente dieser Motoren müssen dazu in der Lage sein, typische und spielzeuggerechte Aufbauten antreiben zu können.

Die Erfindung wird anhand der folgenden Figuren näher erläutert. Es zeigt:
- Fig. 1: Eine Draufsicht auf ein erfindungsgemäßen Spielbaustein,
- Fig. 2: der Spielbaustein aus Figur 1 in einer perspektivischen Ansicht,
- Fig. 3: eine Skizze zur Verdeutlichung des bionischen Flossenprinzips,
- Fig. 4: eine weitere Skizze zur Verdeutlichung der Verformungseigenschaften des Spielbausteins,
- Fig. 5: eine Skizze zur Verdeutlichung des Aufbaus eines alternativen Aufbaus des erfindungsgemäßen Spielbausteins,
- Fig. 6: eine zur Figur 5 äquivalente Skizze mit perspektivischer Ansicht,
- Fig. 7: eine Ausschnittsvergrößerung zur Verdeutlichung der inneren Strukturoptionen,
- Figur 8: eine Darstellung der Verbiegung in eine erste Richtung mit einer korrespondierenden Biegeelastizität (Schubmodul G') in y-Richtung,
- Figur 9: eine Darstellung der Verbiegung in eine erste Richtung mit einer korrespondierenden Biegeelastizität (Schubmodul G) in z-Richtung,
- Figur 10: eine Skizze zur weiteren Verdeutlichung des Flossenprinzips gemäß Figur 3 in vier aufeinander folgenden Verformungszuständen,
- Figur 11: eine Skizze zur weiteren Verdeutlichung der Torsion der Spielbausteine,
- Figur 12.1: ein Beispiel eines konkreten Aufbaus eines zangenartigen Flossengreifers aus Spielbausteinen in einem ein empfindliches Objekt umgreifenden Zustand,
- Figur 12.2: ein Beispiel eines konkreten Aufbaus eines zangenartigen Flossengreifers aus Spielbausteinen in einem ein empfindliches Objekt lose greifenden Zustand,
- Figur 13: ein Beispiel eines konkreten Aufbaus eines dreizähligen Flossengreifers aus Spielbausteinen in einem ein empfindliches Objekt umgreifenden greifenden Zustand,
- Figur 14: ein Beispiel einer Spielzeuglibelle, mit elastischen Flügeln aus den erfindungsgemäßen Spielbausteinen,
- Figur 15: ein Beispiel einer Spielzeug-Fliege, mit elastischen Flügeln aus den erfindungsgemäßen Spielbausteinen,
- Figur 16: Detailansicht auf tordierte Spielbausteine zum Aufbau von Flügeln mit einem typischen gewundenen Flügelprofil.

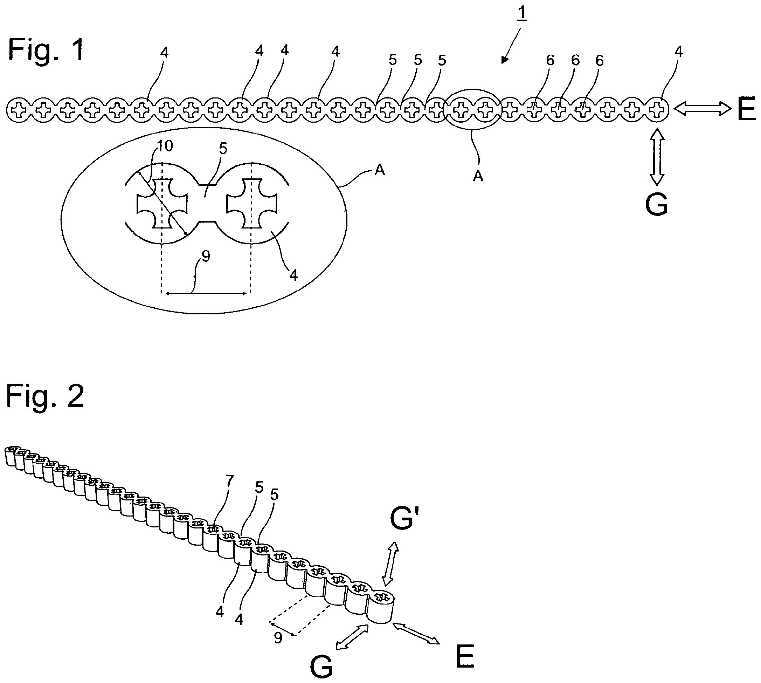

In **Figur 1** ist eine Draufsicht auf einen erfindungsgemäßen Spielbaustein 1 dargestellt, welcher mehrere Einzelglieder 4 in einer kettenähnlichen Struktur aufweist. Dabei sind die Einzelglieder 4 durch Verbindungen 5 miteinander verbunden. Die Art und der Aufbau der Kettenstruktur verleihen dem Spielbaustein 1 unterschiedliche Elastizitäten bzw. Rückstellkräfte in unterschiedliche Raumrichtungen. Damit der Spielbaustein 1 mit weiteren, anderen Spielbausteinen eines Spielbaukastensystems verbunden werden kann, weist der Spielbaustein 1 auch Vorrichtungen 6 zur Verbindung auf, welche im einfachsten Fall eine einfache Ausnehmung sein kann, um dort einen anderen formschlüssigen Spielbaustein einzustecken. Es kann aber auch vorgesehen sein, dass die Vorrichtung 6 zum Verbinden eine profilierte Ausnehmung ist und wie im gezeigten Beispiel die Form hat, die an ein Medaillenkreuz erinnert. Es sind weitere Formen der Vorrichtung 6 zum Verbinden denkbar, wie eine schlitzförmige Ausnehmung oder eine kreuzförmige Ausnehmung mit Lippen zur Erhöhung der Reibung. In Figur 1 ist das in Richtung der linearen Kettenlinie wirkende Elastizitätsmodul E wie auch das zur linearen Kettenlinie senkrecht, also in einem zur Kettenlinienrichtung rechten Winkel, wirkende Schubmodul G dargestellt. Es ist vorgesehen, dass die Rückstellkraft in Richtung des Schubmoduls G deutlich geringer ist als die Rückstellkraft in Richtung des Elastizitätsmoduls E. Der in der Kette eingezeichnete, ovalförmige Ausschnitt A ist unterhalb der Kettenlinie als Ausschnittsvergrößerung A dargestellt. Die Einzelglieder 4 weisen einen mittleren Durchmesser 10 auf und einen wiederkehrenden Abstand 9. In bevorzugter Ausführungsform des erfindungsgemäßen Spielbausteins ist vorgesehen, dass der mittlere Durchmesser 10 eines Einzelglieds 4 etwa so groß ist wie der wiederkehrende Abstand 9 zweier, benachbarter Einzelglieder 4. Die Verbindung 5 zwischen zwei Einzelgliedern 4 ist dabei eingeschnürt oder tailliert zumindest aber weist sie ein deutlich geringeres Materialumfangsvolumen auf als die Einzelglieder 4 selbst, wobei das Materialumfangsvolumen das Volumen der Ausnehmung 7 mit einschließt. Durch die Art und Form der Taillierung ist das unterschiedliche Elastizitätsverhältnis in den verschiedenen Raumrichtungen kontrollierbar.

In **Figur 2** ist der erfindungsgemäße Spielbaustein 1 aus Figur 1 in einer perspektivischen Darstellung skizziert. Die Einzelglieder 4 weisen eine im wesentlichen zylindrische Außenform auf, die durch einen Steg als Verbindung 5 miteinander verbunden sind. Das Höhen-Breitenverhältnis eines Einzelglieds 4 entspricht etwa einer kubischen Raumform, wobei die Breite geringfügig kürzer ist als die Höhe, um dem Steg als Verbindung 5 Raum zu geben. In der perspektivischen Skizze ist das Maß angegeben, welches dem Abstand 9 entspricht und die auf den Spielbaustein 1 bezogenen Raumrichtungen sind eingezeichnet. Dabei entspricht die eingangs erwähnte Richtung in der linearen Kettenlinie der Raumrichtung des Elastizitätsmoduls E, eine erste zur linearen Kettenlinie senkrechte Richtung ist die Richtung des Schubmoduls G und eine zweite zur linearen Kettenlinie senkrechte Richtung ist die Richtung des Schubmoduls G'. Es ist nach der Erfindung vorgesehen, dass die Rückstellkraft entlang des Elastizitätsmoduls E die höchste ist, gefolgt von der Rückstellkraft in Richtung des Schubmoduls G' und diese gefolgt von der Rückstellkraft des Schubmoduls G.

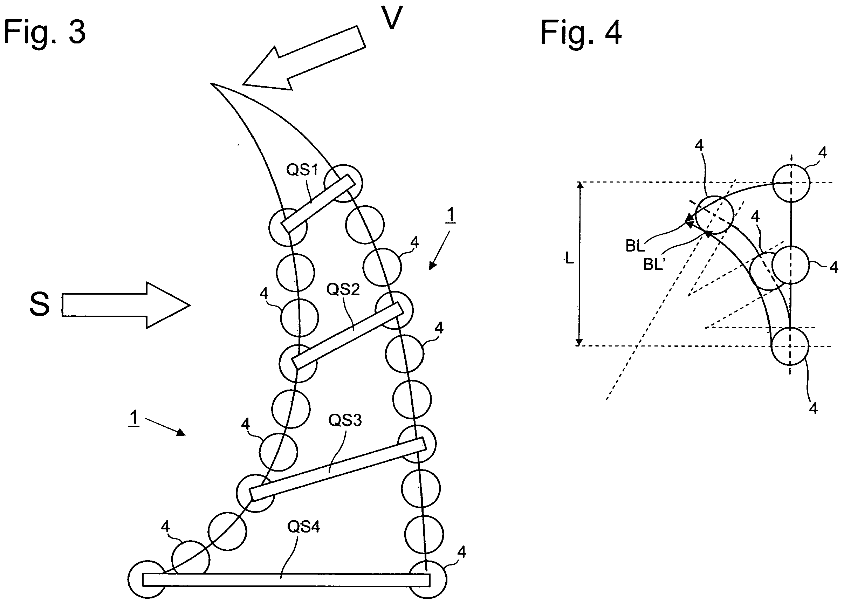

Um den Effekt zu demonstrieren, der durch den erfindungsgemäßen Spielbaustein erreichbar ist, ist in **Figur 3** ein Aufbau aus einem erfindungsgemäßen Spielbaustein 1 dargestellt, der hier zur Vereinfachung als Kugelkette dargestellt ist. Für diesen beispielhaften Aufbau sind zwei im wesentlichen identische Spielbausteine 1 in einer Dreiecksform durch 4 Querstreben QS1, QS2, QS3 und QS4 miteinanderverbunden. Für den bionischen Flosseneffekt genügt es, dass eine seitliche Scherbeanspruchung, wie durch Richtungspfeil S angedeutet, die von unten angeströmte Flosse, wie durch den Richtungspfeil V angedeutet, verformt. In diesem bionischen Flosseneffekt wirkt die Verformung in Richtung des Pfeils V also als antagonistische Bewegung. Es ist mit dem bionischen Flossenprinzip nicht nur möglich, antagonistische Anströmungsbewegungen durchzuführen, sondern auch, sehr behutsame Greifvorrichtungen aufzubauen, wenn diese als zwei- oder mehrgliedrige Zange ausgebildet werden. Dabei bildet je eine hier als Flosse dargestellte Struktur ein Zangenglied, das ein zu greifendes Element, beispielsweise einen Apfel oder ein Ei um greift. Die Form des empfindlichen Objektes, der Apfel oder das Ei, führt zu einer behutsamen, aber durchaus festen Umschließung des gegriffenen Objektes, wodurch sich der erfindungsgemäße Spielbaustein auch dazu eignet, einen bionischen Robotergreifer aufzubauen.

Die Besonderheiten des erfindungsgemäßen Spielbausteins 1 wirken wie in Figur 4 erläutert wird.

In **Figur 4** ist dargestellt, wie sich der erfindungsgemäße Spielbaustein 1, hier repräsentiert durch drei Einzelelemente 4 bei einer Scherbeanspruchung verhält. Die Länge des Kettenauszuges der drei Einzelelemente 4 erfährt durch die Art der Biegung der Stege als Verbindung 5 zwischen den Einzelelementen 4 eine scheinbare Verkürzung. Statt der vollständigen Bogenlänge BL, die der Länge L der drei Einzelglieder 4 entspricht, scheint sich bei einer Scherbeanspruchung die tatsächliche Bogenlänge BL' zu verkürzen. Dies kommt dadurch zustande, weil sich die Stege als Verbindungen 5 deutlich stärker krümmen als es der Verformung eines gleichmäßig geformten Bauelements entsprechen würde. Dadurch werden die Mittelpunkte der Einzelelemente, die selbst der Verformung kaum folgen, näher aneinander gerückt. Diese Verkürzung führt dazu, dass die Dreiecksform in Figur 3 die eingezeichnete Stellung einnimmt, weil die in Figur 3 auf der rechten Seite vorliegende Kettenlinie nicht die Verformung einnimmt, sondern ihre Gesamtlänge behält. Die einzige geometrische Ausweichform ist die in Figur 3 eingezeichnete Form des verformten Dreiecks. Ein isotrop geformtes und isotrop elastisches Bauelement würde dazu führen, dass sowohl die in Figur 3 linke Kette als auch die in Figur 4 rechte Kette als eine seitliche Eindellung erfahren, so dass die Dreiecksform bis auf die seitliche Eindellung erhalten bliebe. Erst die anisotrope Verformbarkeit des Spielbausteins 1 führt zu dem bionischen Flossenprinzip.

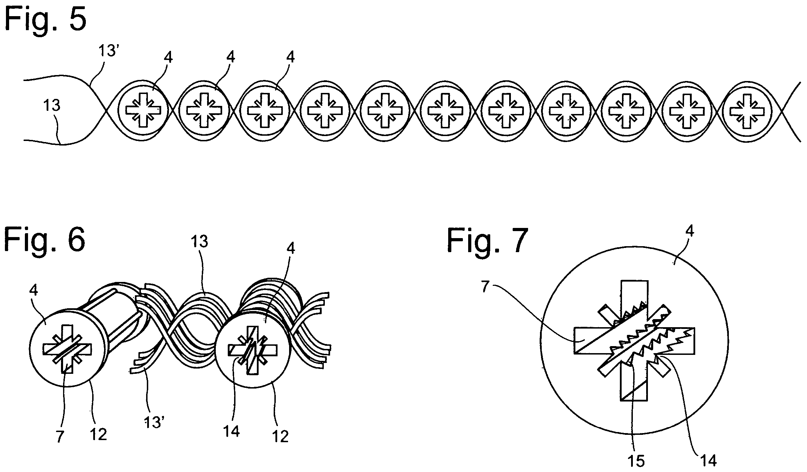

Das Spielbaustein 1 kann aus dem Vollen geschnitten, durch Laserablation erstellt oder in größerer Serie im Spritzgussverfahren hergestellt werden. Für sehr besondere Anwendungen kann der Spielbaustein 1 aus verschiedenen Elementen, die aus demselben oder aus verschiedenen Materialien bestehen, gefertigt werden. Bei der Herstellung durch ein 3D-Druck-Verfahren kann vorgesehen sein, dass ein thermoplastisches Material mit elastischen Eigenschaften als Filament gelegt wird. Das Filament wird zu verschiedenen spulenförmigen Einzelelementen 4 gelegt und dabei thermoplastisch geringfügig unter Sinterung oder Verschmelzung verformt. Um die elastischen Eigenschaften durch das 3D-Druck-Verfahren zu kontrollieren, wird das Filament für den 3D-Druck in zwei mäanderförmigen Wicklungen 13 und 13' um die Einzelelemente 4 gelegt wie es in **Figur 5** dargestellt ist. Die Lage des 3D-Druck-Filaments als mäanderförmige Wicklung 13 und 13' wird in **Figur 6** perspektivisch gezeigt. Die Einzelelemente 4 weisen eine Ausnehmung 7 auf, hier in Form einer sternförmigen Aushöhlung und werden durch zwei gegenläufig, mäanderförmige Wicklungen umwickelt. Bei dem 3D-Druck-Verfahren verschmelzen die Filamente miteinander, so dass sich am Ende des Herstellungsverfahrens das Spielbaustein ergibt, wie es in Figur 2 dargestellt ist. Da das Filament für den 3D-Druck als gerecktes Material vorbestimmte Elastizitäten in Filamentrichtung und Quer dazu aufweist, ist durch dieses Legen des Filaments gewährt, dass die vorbestimmten Eigenschaften des Filaments auch gezielt eingesetzt werden können.

In **Figur 7** ist schließlich dargestellt, dass in der Ausnehmung 7 Lippen 14 zur Erhöhung der Reibung vorgesehen sein können, welche einen anderen Spielbaustein darin festhalten können. Auch ist ein optionales Gewinde 15 darin dargestellt, dass ähnlich den Gewindefragmenten eines an sich bekannten Gewindeschneiders ausgebildet ist. In der hier vorliegenden Form ist das Gewinde 15 aber nicht als schneidendes Gewinde, sondern als eine korrespondierende Schraube aufnehmendes Gewinde gedacht, um einen weiteren, anderen Spielbaustein darin zu befestigen.

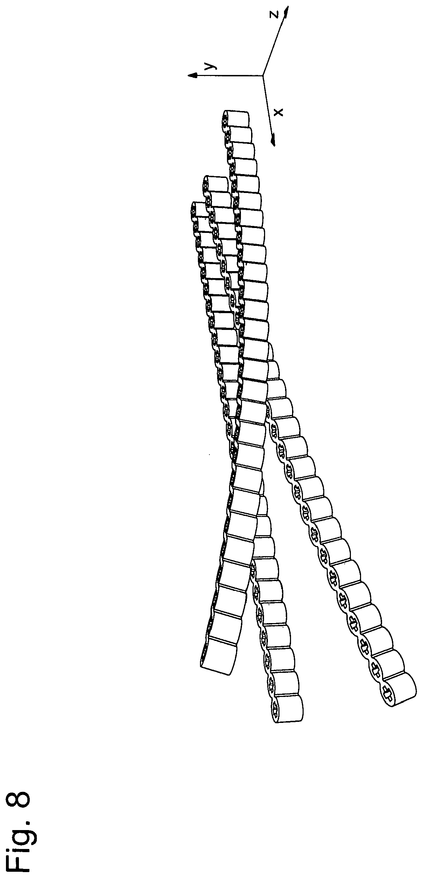

In **Figur 8** ist die Verbiegung in Richtung des Schubmoduls G' gemäß Figur 2 verdeutlicht. Die Rückstellkraft in Richtung des Schubmoduls G' soll dabei zwischen der Rückstellkraft in Richtung des Schubmoduls G gemäß Figur 2 und des Elastizitätsmoduls E liegen. Bei der Verformung ist es wichtig, dass sich der gesamte Spielbaustein 1 gleichmäßig oder zumindest harmonisch und ohne lokale Verformungen, also nicht wie ein Kinken in einem Seil und auch nicht nach Art einer Falte, verformt.

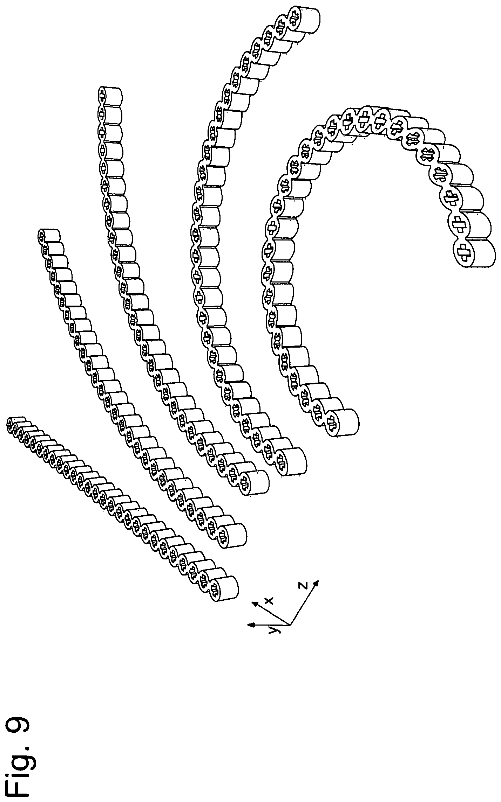

In **Figur 9** ist die Verbiegung bei in Richtung des Schubmoduls G gemäß Figur 2 dargestellt. Die Verformbarkeit soll in Richtung des Schubmoduls G am größten sein, also die geringste Rückstellkraft aufweisen. Die geringe Rückstellkraft erlaubt dem Spielbaustein 1 in Richtung der Schubmoduls G eine starke elastische Verformung aufzuweisen, die gleichmäßig ist oder zumindest harmonisch und ohne lokale Verformungen ist, sich der Spielbaustein also nicht wie ein Kinken in einem Seil und auch nicht nach Art einer Falte, verformt.

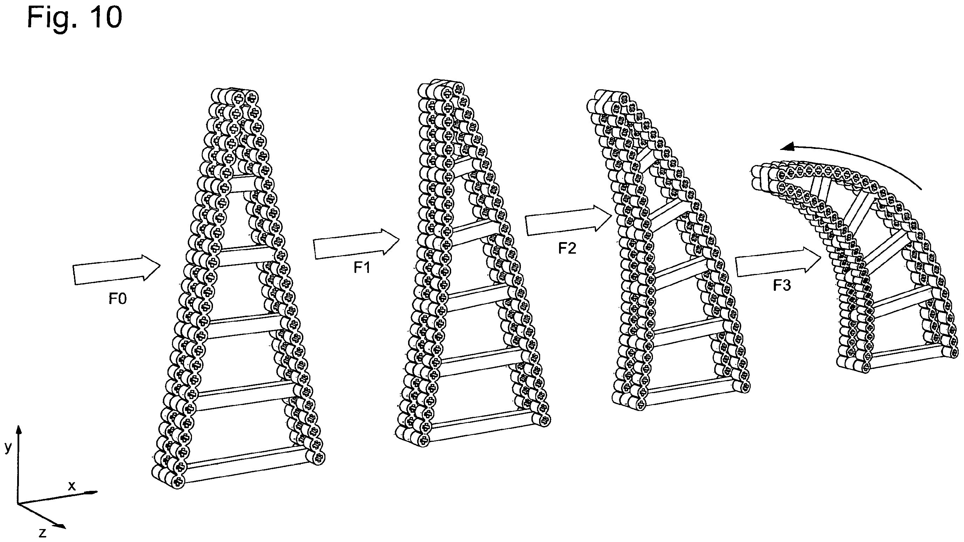

In **Figur 10** ist die Dynamik eines Flossenartigen Aufbaus gemäß Figur 3 in verschiedenen Zuständen deutlicher dargestellt. In einer Kombination aus vier erfindungsgemäßen Spielbausteinen und sechs stangenförmigen Starrelementen mit mindestens einem zu einem Einzelelement des erfindungsgemäßen Spielbausteins korrespondierenden Profil, wobei der erfindungsgemäße Spielbaustein mit den Stangen über Verbindungsbolzen oder Steckstifte verbunden ist, wird das Flossenprinzip hier verdeutlicht. In einem ersten, nicht durch eine seitlich einwirkende Kraft F0 beanspruchten Zustand bildet der im Wesentlichen dreieckige Aufbau ein dachförmiges Dreieck. Bei Einwirkung einer geringen, seitlich einwirkenden Kraft F1 beginnt das Dreieck sich antagonistisch gegen die seitlich einwirkende Kraft zu beugen. Bei einer stärker werden Kraft F2 wird die antagonistische Neigung stärker bis sich schließlich bei einer seitlich einwirkenden Sollkraft F3 der erwünschte Effekt des bionischen Greifers einstellt und das Dreieck entgegen der Kraftwirkung seine Spitze ausrichtet.

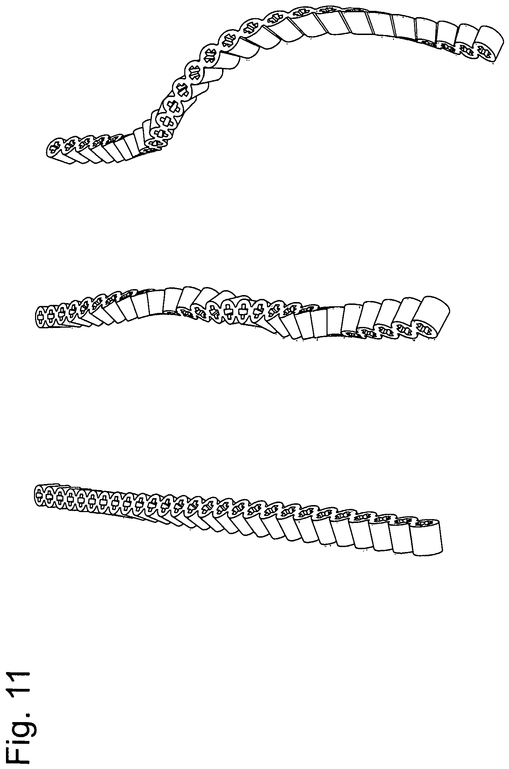

In **Figur 11** ist eine Torsionsbeanspruchung des Spielbausteins in drei Zuständen dargestellt. Im linken Zustand beträgt die Torsion des Spielbausteins etwa 90°. Schon im mittleren Zustand beträgt die Torsion etwa 315°. Im rechten Zustand sind Torsion und Biegung einander überlagert, bei allen Torsions- und Biegebeanspruchungen verhält sich der Spielbaustein als ein sich harmonisch verbiegender, das heißt nicht Kinken ausbildender, Falten oder Sprungstellen ausbildender Spielbaustein.

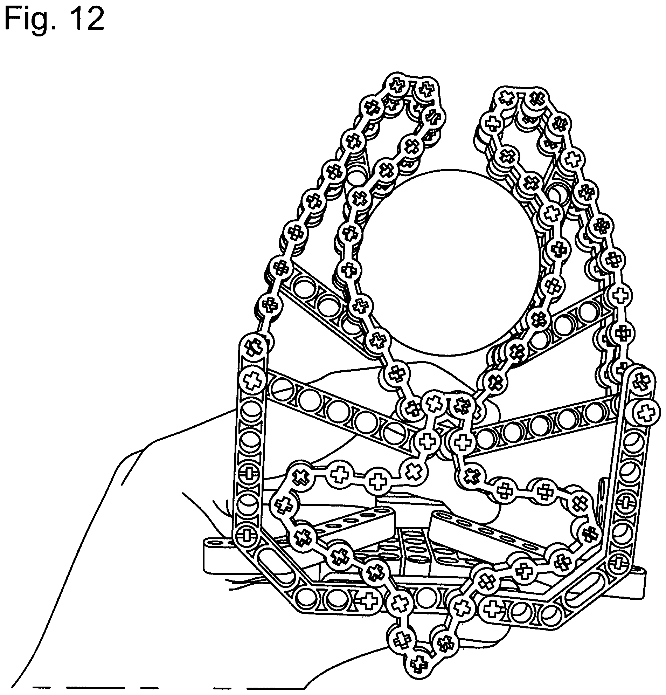

In **Figur 12****.****1** ist ein Beispiel eines konkreten Aufbaus eines zangenartigen Flossengreifers aus den erfindungsgemäßen Spielbausteinen in einem ein empfindliches Objekt (Kugel, Ei) umgreifenden Zustand dargestellt. Der greifende Zustand wird durch manuelles Zusammendrücken entgegen der Rückstellkräfte der verbauten Spielbausteine erreicht.

In **Figur 12****.****2** ist der Aufbau gemäß Figur 12.1 im gelockerten Zustand dargestellt. Das empfindliche Objekt (Kugel, Ei) liegt mit geringerem Umgriff in zwei Zangenbacken gemäß Figur 3 oder Figur 10.

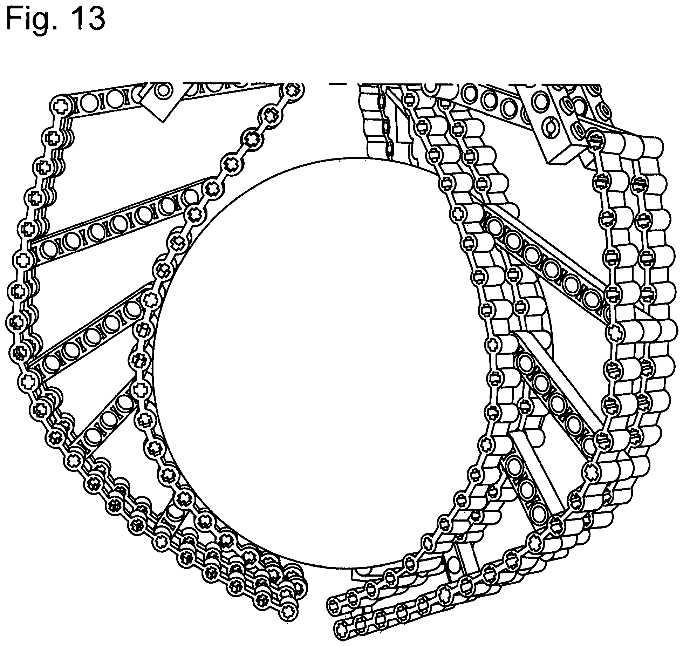

In **Figur 13** ist ein Beispiel eines konkreten Aufbaus eines dreizähligen Flossengreifers aus Spielbausteinen in einem ein empfindliches Objekt umgreifenden greifenden Zustand dargestellt. Die Funktionsweise ist wie in Figur 12.1 / Figur 12.2 gegeben, jedoch wirken hier drei einzelne, flossenähnliche Greifer, die einen Ball sicher umgreifen.

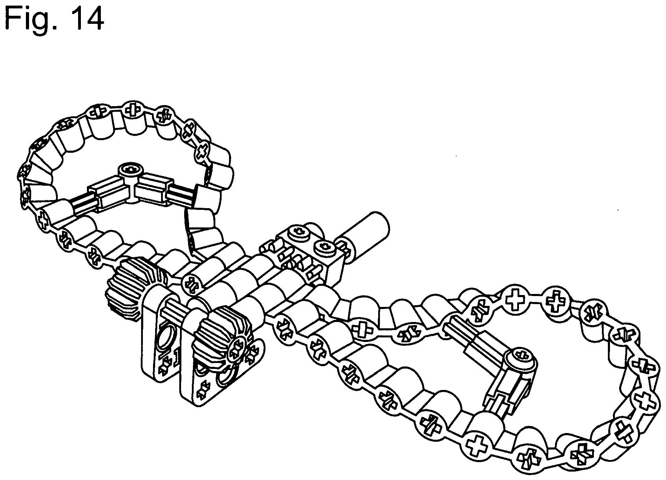

In **Figur 14** ist de Spielbaustein in einer nicht funktionalen, sondern in einer statischen, gestalterischen Nutzung dargestellt. Die Art der Rückstellkräfte aufgrund der unterschiedlichen Schubmodule G und G' sowie Elastizitätsmodul E ermöglichen den Aufbau des Profils eines Libellenflügels.

In **Figur 15** ist ein Aufbau einer Spielzeug-Fliege mit elastischen Flügeln aus den erfindungsgemäßen Spielbausteinen als Beispiel dargestellt, welche tordierte oder nicht tordierte Flügel nach Manier eines Flügelprofils aufweisen kann. Die Torsion des Spielbausteins, die zum Aufbau des typischen, tordierten Flügelprofils entsteht, ist in Figur 16 dargestellt.

In **Figur 16** ist eine Detailansicht auf den tordierten Spielbaustein aus dem Ausbau in Figur 15 näher dargestellt. Zusammen mit weiteren Starrelementen, die in dem Spielbaustein aufgenommen sind, bildet der erfindungsgemäße Spielbaustein das Profil unter eigener Verwindung.

**BEZUGSZEICHENLISTE**

| | | | |
|---|---|---|---|
| 1 | Spielbaustein | 14 | Lippe |
| 2 | elastische Struktur | 15 | Gewinde |
| | | | |
| 4 | Einzelglied | A | Ausschnitt |
| 5 | Verbindung | BL | Bogenlänge |
| 6 | Vorrichtung zur Verbindung | BL' | scheinbare Bogenlänge |
| 7 | Ausnehmung | L | Länge, Abstand |
| 8 | Achse | QS1 | Querstrebe |
| 9 | Abstand | QS2 | Querstrebe |
| 10 | Durchmesser | QS3 | Querstrebe |
| 11 | Zentrum | QS4 | Querstrebe |
| 12 | spulenkörperartiges Element | S | Scherkraftrichtung |
| 13 | Wicklung | V | Verformungsrichtung |
| 13' | Wicklung | | |

## Patentansprüche

1. Spielbaustein (1) zum Aufbau einer elastischen Struktur (2), aufweisend
- eine Mehrzahl von mindestens drei aufeinanderfolgenden kettengliedartigen Einzelgliedern (4), die Einzelglieder weisen eine Ausnehmung auf, die quer zur Achse der Ausnehmung profiliert ist,
**dadurch gekennzeichnet, dass** dieses kettenähnliche Element als Spielbaustein eine geringere Rückstellkraft in Bezug auf eine Scher- oder Biegebeanspruchung aufweist als auf eine Zugbeanspruchung.

2. Spielbaustein nach Anspruch 1
**dadurch gekennzeichnet, dass**
der Abstand (9) der einzelnen Einzelglieder (4) etwa gleich groß ist wie die Größe als mittlerer Durchmesser (10) eines Einzelglieds (4).

3. Spielbaustein nach einem der Ansprüche 1 oder 2,
**dadurch gekennzeichnet, dass**
die Einzelglieder (4) ein starres Zentrum (11) aufweisen.

4. Spielbaustein nach einem der Ansprüche 1 bis 3,
**dadurch gekennzeichnet, dass**
eine einteilige und aus einem einzigen Material bestehende Form vorgesehen ist.

5. Spielbaustein nach einem der Ansprüche 1 bis 4,
**dadurch gekennzeichnet, dass**
eine mehrteilige Form vorgesehen ist, in welcher die Einzelglieder (4) aus einem spulenkörperartigen Element (12) bestehen, welches mit weiteren spulenartigen Elementen (12) benachbart ist, wobei die einzelnen spulenartigen Elemente (12) durch eine mäanderförmige Wicklung (13) miteinander verbunden sind.

6. Spielbaustein nach Anspruch 5,
**dadurch gekennzeichnet, dass**
die Gesamtheit der Einzelglieder (4) in einem Elastomer, in Silikon und/oder einem Kunstkautschuk vergossen ist.

7. Spielbaustein nach einem der Ansprüche 1 bis 6,
**dadurch gekennzeichnet, dass**
die Einzelelemente (4) über ein Rastelement, eine elastische Lippe (14), eine Keilform und/oder ein Gewinde (15) verfügen, über welche die Einzelglieder (4), bevorzugt mit einem weiteren, starren Spielbaustein verbindbar sind.

8. Spielbaustein nach einem der Ansprüche 1 bis 7,
**dadurch gekennzeichnet, dass**
die Verbindung (5) zweier Einzelglieder (4) tailliert ist.

9. Spielbaustein nach einem der Ansprüche 1 bis 8,
**dadurch gekennzeichnet, dass**
die Zugelastizität (Elastizitätsmodul) im Intervall zwischen 2 N/mm² (2 MPa) und 750 N/mm² (750 MPa) liegt, bevorzugt zwischen 4 N/mm² (4 MPa) und 250 N/mm² (250 MPa), besonders bevorzugt zwischen 5 N/mm² (5 MPa) und 50 N/mm² (50 MPa) liegt.

10. Spielbaustein nach einem der Ansprüche 1 bis 9,
**dadurch gekennzeichnet, dass**
in Richtung eines ersten Schubmoduls senkrecht zur Kettenlinienrichtung, also in einem rechten Winkel zur geraden Kettenlinie, dieser
- bei im Mittel etwa 22 mm² bis 38 mm² Querschnitt, eine Auslenkung von 3,6 cm bei einer irdischen Gewichtskraft von 8 g, entsprechend etwa ca. 0,08 N, bei einer Länge des Spielbausteins von 20 cm bis
- bei im Mittel etwa 22 mm² bis 38 mm² Querschnitt, eine Auslenkung von 0,9 cm bei einer irdischen Gewichtskraft von 8 g, entsprechend etwa 0,08 N bei einer Länge des Spielbausteins von 20 cm aufweist.

11. Spielbaustein nach einem der Ansprüche 1 bis 10,
**dadurch gekennzeichnet, dass**
in Richtung eines zweiten Schubmoduls senkrecht zur Kettenlinienrichtung, also in einem rechten Winkel zur geraden Kettenlinie, dieser
- bei im Mittel etwa 22 mm² bis 38 mm² Querschnitt, eine Auslenkung von 1,8 cm bei einer irdischen Gewichtskraft von 9 g, entsprechend etwa ca. 0,09 N, bei einer Länge des Spielbausteins von 20 cm bis
- bei im Mittel etwa 22 mm² bis 38 mm² Querschnitt, eine Auslenkung von 0,5 cm bei einer irdischen Gewichtskraft von 9 g, entsprechend etwa 0,09 N bei einer Länge des Spielbausteins von 20 cm aufweist.

12. Spielbaustein nach einem der Ansprüche 1 bis 11,
**dadurch gekennzeichnet, dass**
in Richtung eines Torsionsmoduls mit der geraden Kettenlinie als Torsionsachse, dieser bei im Mittel etwa 22 mm² bis 38 mm² Querschnitt und bei einer Torsion um 90° ein Drehmoment von 3,5 g (ca. 0,035 N) bei einem Hebel von 10 cm und bei einer Länge des Torsionsbereichs des Spielbausteins von 20 cm aufweist bis
in Richtung eines Torsionsmoduls mit der geraden Kettenlinie als Torsionsachse, dieser bei im Mittel etwa 22 mm² bis 38 mm² Querschnitt und bei einer Torsion um 90° ein Drehmoment von 14 g (ca. 0,14 N) bei einem Hebel von 10 cm und bei einer Länge des Torsionsbereichs des Spielbausteins von 20 cm aufweist.

13. Set aus mindestens einem Spielbaustein nach Anspruch 1 bis 12 und mindestens einem stangenförmigen Starrelement mit mindestens einem zu einem Einzelglied des erfindungsgemäßen Spielbausteins korrespondierenden Profil, wobei der erfindungsgemäße Spielbaustein mit den Stangen über Verbindungsbolzen oder Steckstifte verbindbar ist.

## Claims

1. Toy building block (1) for building a flexible structure (2), including
- a plurality of at least three consecutive chain link- like single members (4), the single members having a recess which is profiled transversely to the axis of the recess,
**characterized in that** this chain link-like element has a lower restoring force in response to a shear or bending stress than to a tensile stress.

2. Toy building block according to Claim 1,
**characterized in that** the distance (9) between the individual single members (4) is approximately equivalent to the size as the average diameter (10) of a single member (4).

3. Toy building block according to Claim 1 or 2,
**characterized in that** the single members (4) have a rigid centre (11).

4. Toy building block according to any one of Claims 1 to 3, **characterized in that** a one-part form consisting of a single material is provided.

5. Toy building block according to any one of Claims 1 to 4, **characterized in that** a multi-part form is provided in which the single members (4) consist of an element (12) resembling a bobbin, which element is adjacent to other bobbin-like elements (12), wherein the individual bobbin-like elements (12) are connected to each other via a meander-shaped winding (13).

6. Toy building block according to Claim 5, **characterized in that** the entirety of the single members (4) is cast in an elastomer, in silicone and/or a synthetic rubber.

7. Toy building block according to any one of Claims 1 to 6, **characterized in that** the single members (4) are furnished with a latching element, an elastic lip (14), a wedge formation and/or a thread (15) via which the single members (4) can be connected preferably to a further rigid building block.

8. Toy building block according to any one of Claims 1 to 7, **characterized in that** the connection (5) between two single members (4) is tapered.

9. Toy building block according to any one of Claims 1 to 8, **characterized in that** the tensile elasticity (modulus of elasticity) lies in the range between 2 N/mm² (2 MPa) and 750 N/mm² (750 MPa), preferably between 4 N/mm² (4 MPa) and 250 N/mm² (250 MPa), particularly preferably between 5 N/mm² (5 MPa) and 50 N/mm² (50 MPa).

10. Toy building block according to any one of Claims 1 to 9, **characterized in that** in the direction of a first shear modulus perpendicular to the direction of the chain line, that is to say at right angles to the straight chain line,
- with an average cross section size of 22 mm² to 38 mm² said toy building block has a deflection of 3.6 cm under a terrestrial weight force of 8 g, corresponding to approximately 0.08 N for the toy building block having a length of 20 cm until
- with an average cross section size of 22 mm² to 38 mm² said toy building block has a deflection of 0.9 cm under a terrestrial weight force of 8 g, corresponding to approximately 0.08 N for the toy building block having a length of 20 cm in the direction of a first shear modulus perpendicular to the direction of the chain line, that is to say at right angles to the straight chain line.

11. Toy building block according to any one of Claims 1 to 10, **characterized in that** in the direction of a second shear modulus perpendicular to the direction of the chain line, that is to say at right angles to the straight chain line,
- with an average cross section size of 22 mm² to 38 mm² said toy building block has a deflection of 1.8 cm under a terrestrial weight force of 9 g, corresponding to approximately 0.09 N for the toy building block having a length of 20 cm until
- with an average cross section size of 22 mm² to 38 mm² said toy building block has a deflection of 1.8 cm under a terrestrial weight force of 9 g, corresponding to approximately 0.09 N for the toy building block having a length of 20 cm.

12. Toy building block according to any one of Claims 1 to 11, **characterized in that** in the direction of the modulus of torsion with the straight chain line as the axis of torsion, with an average cross section size of 22 mm² to 38 mm² and a torsion of 90° said toy building block has a turning moment of 3.5 g (approx. 0.035 N) with a lever of 10 cm and a torsion area length in the building block of 20 cm until in the direction of the modulus of torsion with the straight chain line as the axis of torsion, with an average cross section size of 22 mm² to 38 mm² and a torsion of 90° said toy building block has a turning moment of 14 g (approx. 0.14 N) with a lever of 10 cm and a torsion area length in the building block of 20 cm.

13. Set of at least one toy building block according to any of Claims 1 to 12 and at least one rod-like rigid element having at least one profile corresponding to a single member of the toy building block according to the invention, wherein the toy building block according to the invention can be connected to the rods by means of connecting studs or push-in pins.

## Revendications

1. Composant de jeu de construction (1) destiné à créer une structure élastique (2), comportant
- une pluralité d'au moins trois maillons individuels (4) successifs, sous forme de maillons de chaîne, les maillons individuels comportent un évidement qui est profilé à la transversale de l'axe de l'évidement,
**caractérisé en ce que** ledit élément analogue à une chaîne faisant office de composant de jeu de construction fait preuve d'une force de rappel plus faible lors d'une contrainte en cisaillement ou en flexion que lors d'une contrainte en traction.

2. Composant de jeu de construction selon la revendication 1, **caractérisé en ce que** l'écart (9) entre les maillons individuels (4) isolés est approximativement égal à la dimension d'un diamètre moyen (10) d'un maillon individuel (4).

3. Composant de jeu de construction selon l'une quelconque des revendications 1 ou 2, **caractérisé en ce que** les maillons individuels (4) possèdent un centre rigide (11).

4. Composant de jeu de construction selon l'une quelconque des revendications 1 à 3, **caractérisé en ce qu'**il est prévu une forme en monobloc et en une seule matière.

5. Composant de jeu de construction selon l'une quelconque des revendications 1 à 4, **caractérisé en ce qu'**il est prévu une forme en plusieurs parties, dans laquelle les maillons individuels (4) sont constitués d'un élément (12) en forme de corps de bobine, lequel avoisine d'autres éléments (12) en forme de bobines, les éléments (12) individuels en forme de bobines étant assemblés par un enroulement (13) en forme de méandre.

6. Composant de jeu de construction selon la revendication 5, **caractérisé en ce que** l'ensemble des maillons individuels (4) est coulé en un élastomère, en silicone et/ou en un caoutchouc synthétique.

7. Composant de jeu de construction selon l'une quelconque des revendications 1 à 6, **caractérisé en ce que** les éléments individuels (4) disposent d'un élément d'encliquetage, d'une lèvre élastique (14), d'une forme en coin et/ou d'un filetage (15), par l'intermédiaire desquels les maillons individuels (4), sont susceptibles d'être assemblés avec un autre composant de jeu de construction rigide.

8. Composant de jeu de construction selon l'une quelconque des revendications 1 à 7, **caractérisé en ce que** l'assemblage (5) de deux maillons individuels (4) est taillé.

9. Composant de jeu de construction selon l'une quelconque des revendications 1 à 8, **caractérisé en ce que** l'élasticité à la traction (module d'élasticité) se situe dans un intervalle compris entre 2 N/mm² (2 MPa) et 750 N/mm² (750 MPa), de préférence entre 4 N/mm² (4 MPa) et 250 N/mm² (250 MPa}, de manière particulièrement préférentielle, entre 5 N/mm² (5 MPa) et 50 N/mm² (50 MPa).

10. Composant de jeu de construction selon l'une quelconque des revendications 1 à 9, **caractérisé en ce que** dans la direction d'un premier module de cisaillement, à la perpendiculaire de la direction de la ligne de chaîne, donc sous un angle droit par rapport à la ligne de chaîne droite,
- pour une section transversale moyenne d'environ 22 mm² à 38 mm², il fait preuve d'une déviation de 3,6 cm à une force de pesanteur terrestre de 8 g, correspondant à environ 0,08 N, à une longueur du composant de jeu de construction de 20 cm jusqu'à
- pour une section transversale moyenne d'environ 22 mm² à 38 mm², il fait preuve d'une déviation de 0,9 cm à une force de pesanteur terrestre de 8 g, correspondant à environ 0,08 N, à une longueur du composant de jeu de construction de 20 cm.

11. Composant de jeu de construction selon l'une quelconque des revendications 1 à 10, **caractérisé en ce que** dans la direction d'un deuxième module de cisaillement, à la perpendiculaire de la direction de la ligne de chaîne, donc sous un angle droit par rapport à la ligne de chaîne droite,
- pour une section transversale moyenne d'environ 22 mm² à 38 mm², il fait preuve d'une déviation de 1,8 cm à une force de pesanteur terrestre de 9 g, correspondant à environ 0,09 N, à une longueur du composant de jeu de construction de 20 cm jusqu'à
- pour une section transversale moyenne d'environ 22 mm² à 38 mm², il fait preuve d'une déviation de 0,5 cm à une force de pesanteur terrestre de 9 g, correspondant à environ 0,09 N, à une longueur du composant de jeu de constructions de 20 cm.

12. Composant de jeu de construction selon l'une quelconque des revendications 1 à 11, **caractérisé en ce que**
dans la direction d'un module de torsion, avec la ligne de chaîne droite en tant qu'axe de torsion, pour une section transversale moyenne d'environ 22 mm² à 38 mm² et avec une torsion de 90°, il fait preuve d'un couple de rotation de 3,5 g (environ 0,035 N) avec un levier de 10 cm et une longueur de la zone de torsion du composant de jeu de construction de 20 cm jusqu'à
dans la direction d'un module de torsion, avec la ligne de chaîne droite en tant qu'axe de torsion, pour une section transversale moyenne d'environ 22 mm² à 38 mm² et avec une torsion de 90°, il fait preuve d'un couple de rotation de 14 g (env. 0,14 N) avec un levier de 10 cm et une longueur de la zone de torsion du composant de jeu de construction de 20 cm.

13. Kit, comprenant au moins un composant de jeu de construction selon la revendication 1 à 12 et au moins un élément rigide en forme de barre, présentant au moins un profil correspondant à un maillon individuel du composant de jeu de construction selon l'invention, le composant de jeu de construction selon l'invention étant susceptible d'être assemblé avec les barres par l'intermédiaire de boulons d'assemblage ou de tiges à emboîter.
